# EUROPEAN PATENT SPECIFICATION

(11) **EP 0 886 409 B1**
(45) Date of publication and mention of the grant of the patent: **30.09.2009**
(21) Application number: 98107899.1
(22) Date of filing: 30.04.1998
(51) Int. Cl.: H04L 29/06, G06F 1/00

(54) **Information providing system**
System zur Versorgung mit Informationen
Système fournisseur d'informations

(30) Priority: 01.05.1997 JP 11393997
(43) Date of publication of application: 23.12.1998
(60) Divisional application: 08001937.5
(73) Proprietor: Panasonic Corporation, Kadoma-shi Osaka 571-8501 (JP)
(72) Inventor: Muratani, Hirofumi, Takatsu-ku, Kawasaki-shi (JP)
(74) Representative: Lins, Edgar

(56) References cited:
- US-A- 5 590 199
- GONG L: "NEW SECURITY ARCHITECTURAL DIRECTIONS FOR JAVA (EXTENDED ABSTRACT)" SAN JOSE, FEB. 23 - 26, 1997,LOS ALAMITOS, IEEE COMP. SOC. PRESS,US, 23 February 1997 (1997-02-23), pages 97-102, XP000751767 ISBN: 0-8186-7805-4

## Description

The present invention relates to an information providing system and more particularly to an information providing system which allows information to be provided readily while ensuring information protection.

With the advance of the Internet and the development of large-volume storage media such as DVDs and the like, various information providing services have been implemented regardless of online or offline. The information providers, which are companies that provide information as business, charge users for usage of information.

Forms of charging include charging on the basis of the amount of time that information is used, charging on the basis of the amount of information (the number of bytes) that is used, charging on the basis of a unit of information (for example, a movie), and so on. Under the present circumstances, only the forms of charging determined by the information providers are implemented. To be specific, in a closed system in which dedicated hardware is used, as in a cable television broadcasting service, a charging program is described in an application program installed in a data processing terminal (computer) on the user side or a server on the information provider side. In order to change the form of charging, therefore, it is required to rewrite the application program itself. It is thus not so easy to change the charging form. To provide a variety of forms of charging, it is desirable to add a new form or forms of charging and allow users to make a choice from the set forms of charging. However, this needs to modify the program considerably.

In addition, with the recent evolution of multimedia techniques, a case is also increasing in which one user subscribes to a number of information providers and receives a number of information providing services. In this case, an application program will be needed for each individual information providing service. The conventional charging facility, which is contained in an application program, cannot be commonly used in different application programs. For this reason, when an information service provider creates a new application program, it is also required to create a new charging program. However, the charging function is inherently independent of application programs and should be able to be used in common to different application programs. Preparing a charging program for each application program offers drawbacks that the program developing time is useless and each program increases in size and complexity.

The inventor of the present application proposed previously a system in which the usage of information (data processing function) and the charging process are separated from each other, the former being implemented by an application program, and the latter being implemented by a platform that differs from the application program (Japanese Patent Application No. 8-259,433). Here, the information provider separates information to be provided (hereinafter referred to as content data) or information, such as addresses, that identify content data and control information (referred to as a service description) required to utilize the content data or the information providing service. The service description includes information for identifying an application program utilizing content data to be provided, information for identifying a charging policy associated with the utilization of the content data, and information indicating a key needed to decrypt the content data in encrypted form. An example of the service description is such that a video playback application "A" is needed to utilize a video data "B", the charge for that video data "B" is 1000yen and the user must pay a fee to Mr. "C" in accordance with a settlement method "D". In this manner, users are allowed to utilize content data on the basis of the service description.

If the service description remained unprotected on the information transmitting path from an information provider to a user or at the user site, the service description might be altered. In such case, the information provider would be unable to collect a charge and have its digital rights infringed. The digital rights include a copy right or a counterpart right for service creation or service provision which should be belonged to the provider.

The provider's digital rights include the right of the service description as well as the copyright of the content data. For example, the information provider has rights to claim that "content data should be used in this manner", "content data should not be used in this manner", etc. For example, one who wrote a computer program can claim that the program may be run but no copying is allowed, or the program may be copied but no modifications are allowed and can define a charging policy such that the charge is 10yen per minute as the service description. The utilization that does not observe the service description constitutes an infringement of the digital rights. If the service description was not protected, then malicious users could rewrite the charging policy to thereby make the charges for information free. In such case, the information provider would suffer a great loss because the charging processor fails to work.

In order to protect the provider's digital rights, therefore, it is required to protect the service description as well as the content data. Like the content data, the service description is digital data and hence may be protected by encryption. That is, the content data and the service description are encrypted so that they cannot be interpreted at the time of utilization in the absence of a key, such as a token or ticket, issued by the information provider. The key is transmitted from the information provider to the user via a protected secure path independently of the service description.

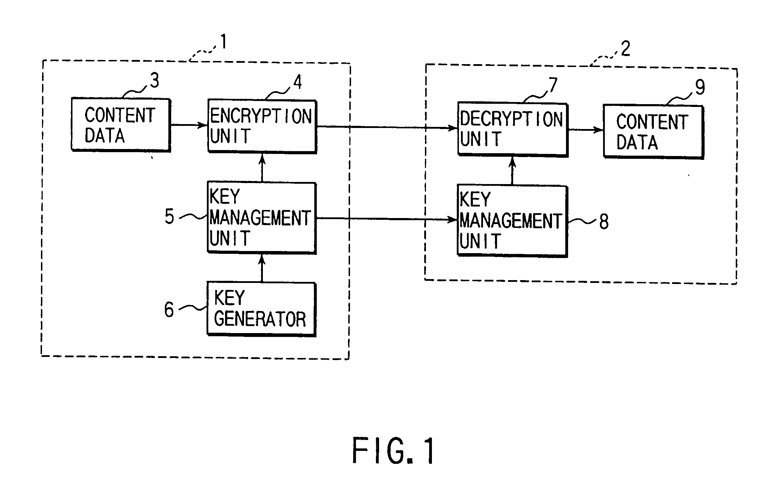

FIG. 1 is a block diagram of such a conventional system. A server 1 located on the provider side converts content data 3 into an encrypted form in an encryption unit 4 and then sends it to a terminal 2 located on the user side. An encryption key is generated by a key generator 6 and then transmitted by a key management unit 5 to the user device 2 over a secure path which is different from that for the data 3. On the user side, the key is stored in a key management unit 8 and the encrypted content data is stored in a decryption unit 7. Using the key in the key management unit 8, the content data is decrypted in the decryption unit 7, whereby content data 9 is made available.

However, even if the key is transmitted to the user site over a secure path, once the key is passed to the user or the user's application program, there arises the possibility that the service description after decryption may be altered at the user site. Thus, there is an essential drawback that the provider's digital rights may not be protected.

Even if the service description is passed to a user in an encrypted form that is not dependent on various content data transmitting forms such as broadcasting, on-demand, DVD, etc., a key is passed to the user on demand. It is not known when the user will make a service request. For this reason, the information provider is required to run the key issuing serve all the time. This will cost the information provider and is not suitable for information providing service by individuals.

The US 5,590,199 disclosed a system for authorization a user to access a computer network by a workstation which is connected with an authorization server. The user couples a personally protectable coprocessor (smart card) to the workstation by means of a bidirectional communications channel. The coprocessor is adapted to receive signals including first encrypted authentication information and to decrypt the information using a first key. The coprocessor is further adapted to assemble and encrypt second authentication information using a second key and to transmit the encrypted second authentication information to the workstation. The workstation communicates the information onto the network whereby the user is authenticated.

Accordingly, it is an object of the present invention to provide an information providing system which permits information to be provided readily while ensuring information protection.

The invention is as defined in the appended claims 1-14.

The user device comprises service package decryption means for decrypting the encrypted service package and means for disabling the service package decryption means from decrypting the encrypted service package when it is not guaranteed that the decrypted service package should not be retained within the user device nor be output to the outside of the user device.

The service package comprises information for identifying information to be provided, information for identifying an application program that utilizes the information to be provided, and information indicating a charging policy relating to the utilization of the information to be provided, and the user device comprises an application program execution unit that operates in response to the decrypted application program identifying information, a charging unit that operates in response to the decrypted charging policy identifying information.

The application program execution unit is implemented by an application program, and the charging unit is implemented by a platform that is different from the application program.

The provider device comprises means for sending to the user device, a second charging policy identical to the charging policy contained in the encrypted service package without encryption.

The first key used in the first encryption system is generated in the information storage card.

The first key used in the first encryption system is generated by an authorized agent and is written into the information storage card.

The provider device comprises means for sending a ticket to the user device, the ticket associating information identifying the service package with information identifying a key used to encrypt that service package and the user device comprises means for identifying a key associated with the service package to be utilized on the basis of the ticket.

The information providing system further comprises a repeater unit for receiving the message data from the provider device and transmitting the received message data to the user device.

According to the present invention, there is provided another information providing system comprising a provider device for providing information to users; a user device for utilizing information; and a security module adapted to be connected to the provider device and the user device and comprising means for storing a second key in such a way that it cannot be read out to outside, in which the provider device comprises means for sending to the user device, a service package that describes information necessary for utilization of information, the service package being encrypted in accordance with a first encryption system, a first key used in the first encryption system being encrypted using the second key stored in the security module; and the user device comprises means for decrypting the encrypted first key within the security module.

According to the present invention, there is provided an information providing device for providing information to users with an information storage card for storing a second key, the device comprising means for transmitting, a service package that describes information necessary for utilization of the provided information, the service package being encrypted in accordance with a first encryption system; and means for transmitting a first key used in the first encryption system, the first key being encrypted using the second key which is stored in the information storage card.

According to the present invention, there is provided still another information providing system for providing content data and message data in association with the content data, comprises means for calculating a first value of a unidirectional function or unidirectional hash function to which the whole message data or parts of the message data are input, a second value of a key generation function to which the first value is input, or a third value of a key generation function to which the first value and data included in the associated message or stored in the device are input, as a key.

The information providing system further comprises means for attaching the message data with a digital signature.

The message data contains charging information concerning a charge for usage of the content data.

The message data contains data described in a format including SGML, HTML, MHEG, or XML, and their extended or limited format.

According to the present invention, there is still another information utilization device for use with an information providing system in which content data and its associated message data are provided and the content data is encrypted, the device comprising means for calculating a first value of a unidirectional function or unidirectional hash function to which the whole message data or parts of the message data are input, a second value of a key generation function to which the first value is input, or a third value of a key generation function to which the first value and data included in the associated message or stored in the device are input, as a key.

The message data is attached with a digital signature.

The message data contains charging information concerning a charge for usage of the content data.

The message data contains data described in a format including SGML, HTML, MHEG, or XML, and their extended or limited format.

According to the present invention, there is provided still another information providing system comprising an information providing device which, in encrypting content data using an encryption key, uses a value of a unidirectional function or unidirectional hash function to which at least two parts of message data associated with the content data as the encryption key and transmitting the encrypted content data; a repeater unit for receiving the message data from the information providing device and transmitting the received message data; and an information utilization device which, in decrypting the encrypted content data transmitted from the information providing device using an decryption key, uses a value of a unidirectional function or unidirectional hash function to which the whole message data or parts of the message data associated with the content data and transmitted from the information providing device or the repeater unit as the decryption key.

The information providing device encrypts the message data, and the repeater unit decrypts the received encrypted message data, encrypts the message data again and transmits the encrypted message data.

The information providing device sends the message data with a provider's signature attached, and the repeater unit verifies the signature on the received message data and transmits the message data with a message data receiver's signature attached.

The repeater unit is in the form of the information utilization device.

According to the present invention, there is provided an encryption device for encrypting content data and its associated message data to be separately transmitted, the device comprising means for calculating an value of a unidirectional function or unidirectional hash function to which the whole message data or parts of the message data are input; and
means for encrypting the content data using the value of the unidirectional function or unidirectional hash function as a key.

The invention can be more fully understood from the following detailed description when taken in conjunction with the accompanying drawings, in which;
FIG. 1 is a block diagram of a conventional information providing system;
FIG. 2 is a block diagram illustrating a system configuration on the provider side in accordance with a first embodiment of an information providing system of the present invention;
FIG. 3 is a block diagram illustrating a system configuration on the user side in accordance with the first embodiment of the present invention;
FIG. 4 is a detailed block diagram of the service instance of FIG. 3;
FIG. 5 is a block diagram of a security module in accordance with a second embodiment of the information providing system of the present invention;
FIG. 6 shows a security module for a user having a repeater function according to a second embodiment of the present invention;
FIG. 7 shows a security module for a repeater according to the second embodiment of the present invention;
FIG. 8 shows a security module for an information provider having the repeater function according to the second embodiment of the present invention;
FIG. 9 shows a communication protocol between two security modules for two terminals;
FIG. 10 shows a system for an information provider according to a third embodiment of the present invention;
FIG. 11 shows a system for an agent or repeater according to the third embodiment of the present invention;
FIG. 12 shows a system for a user according to the third embodiment of the present invention;
FIG. 13 shows a modified system for the information provider according to the fourth embodiment of the present invention;
FIG. 14 shows a modified system for the agent according to the third embodiment of the present invention; and
FIG. 15 shows a modified system for the user according to the third embodiment of the present invention.

A preferred embodiment of an information providing system according to the present invention will now be described with reference to the accompanying drawings.

### (First Embodiment)

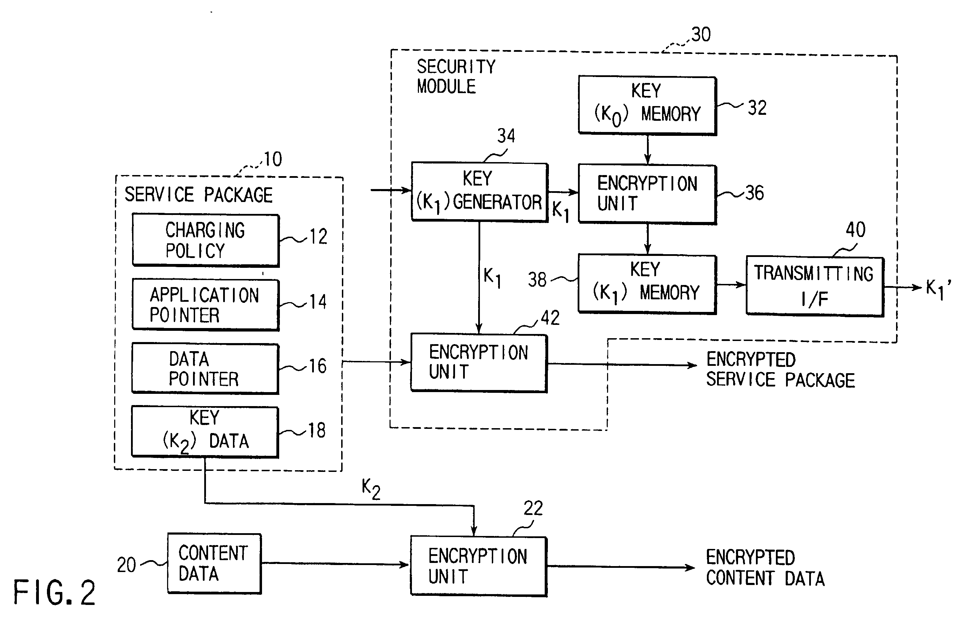

Referring now to FIG. 2, there is illustrated an arrangement of a system on the information provider side in accordance with a first embodiment of the invention. In the present invention, as in the conventional system described previously, in order to allow the charging function to serve as a platform, a data processing unit, such as a server, on the information provider side creates a service package 10 that contains a pair of content data (name of the content data) the information provider provides and information (referred to as service description) required for control of the information or information representing the correspondence relationship between the content data and the service description. The service package 10 may include data described in accordance with a format such as SGML(Standard Generalized Markup Language), HTML(HyperText Markup Language), MHEG(Multimedia and Hypermedis Experts Group), XLM(eXtensible Markup Language), and their expanded or limited formats. The service package is such that MPEG data "D₁" (the name or address of content data) is encrypted using a key "K₂", processed by an application program "A₁", and subjected to a charging process "C₁". The user can actually make use of the content data on the basis of the service description in the service package 10. Thus, the service package 10 comprises a charging policy 12 indicating the form of charging, an application pointer 14 indicating an application program that utilizes content data, a data pointer 16 indicating the name or address of content data provided, and key data 18 indicating the key K₂ required to encrypt data. The charging policy 12 includes a usage fee, a usage condition, a paying method, or a payee.

Content data 20 provided is encrypted in an encryption unit 22 using the key K₂ and then transmitted to a user site over a transmitting interface (not shown). The encryption key K₂, which may be chosen freely by the provider, should preferably be one peculiar to the content data. Encrypted content data may be distributed online via the Internet or offline using DVD.

The encryption system may be either a common key system or a public key system. In the common key system, the key used to encrypt data and the key used to decrypt encrypted data are the same. In the public key system, on the other hand, the encryption key and the decryption key are different, and one of the keys is made public with the other kept secret. The provider encrypts data using the user's public key, and the user decrypts the encrypted data using his or her secret key. Thus, the public key encryption can be adopted only when each user is identified. According to the public key system, the content data is encrypted by using a public key K₂ so that a secret key corresponding to the public key must be transmitted to the user. Even with the colon key system, the key K₂ need not necessarily be contained in the service package 10 that is protected in accordance with the present invention. If there is a separate secure path, the key may be transmitted to the user over that path.

The service package 10 itself is encrypted for transmitting to the user. This transmitting may be made either online or offline. It should be noted however that the service package 10 is encrypted using a key K₁ which is different from the content encryption key K₂, and the key K₁ itself is also encrypted using still another key K₀ for transmitting to the user site. For encryption of the service package 10 and encryption of the encryption keys K₁ and K₂, in addition to the common key system the public key encryption system may also be used provided that each user is identified.

The key K₁ and the key K₀ for encrypting the key K₁ are kept absolutely unknown to the user. In the present invention, therefore, a security module 30 is used which is physically disabled from readout of data to outside. The encryption is performed inside the module 30. In order to increase terminal versatility, the module 30 should preferably be made of a semiconductor information storage card (a smart card, PCMCIA card, or the like) which provides the physical protection of data. However, if the terminal is implemented as a dedicated one, the module does not necessarily be removably mounted like a card, but can be fixedly mounted to part of the terminal.

The security module 30 comprises a key (K₀) memory 32, a key (K₁) generator 34, encryption units 36 and 42, an encrypted key (K₁') memory 38, and an encrypted key (K₁') transmitting interface 40. The key generator 34 generates an encryption key K₁ peculiar to the service package 10 in accordance with information that identifies the externally supplied service package 10. However, the key K₁ need not necessarily be generated within the module 30; it may be generated by a reliable organization and written into the security module 30.

The service package 10 is encrypted in the encryption unit 42 using the key K₁ and then transmitted to the user site via a transmitting interface not shown. The key K₁ used to encrypt the service package 10 is further encrypted in the encryption unit 36 using the key K₀ stored in the security module 30. The key (K₀) memory 32 consists of a nonvolatile memory. The key K₀ is stored at the time of creating the module 30 in such a way that it can never be accessed from outside at a later time. The key K₀ may be a key specific to the information provider irrespective of data/service package.

The encrypted key K₁' is stored in the memory 38. This is intended to omit work of encrypting the key K₁ each time the same service package 10 is encrypted. Thus, the key K₁' memory 38 can store keys K₁' obtained by encrypting encryption keys K₁, one for each of different service packages, using the key K₀. If, when a certain service package is specified, the corresponding key exists among the keys K₁' already stored, it is only required to read that key from the memory 38.

The key K₁' stored in the memory 38 is transmitted to the security module at the user site without being accessed from outside. When a semiconductor information storage card is used as the security module, the key K₁' is transmitted to the user's card in accordance with a card-to-card communications protocol. Thus, the key K₁' obtained by encrypting the service package encryption key K₁ is not output to the outside of the security module 30 nor does it become known to the user, preventing the service package 10 from being altered by a third party.

It is not required that the encrypted service package encrypted key K1' be transmitted simultaneously with the encrypted service package. As described previously, a key K₁ is peculiar to a service package. If, therefore, there exist multiple encrypted service packages and multiple encrypted service package encryption keys K₁' at the user site and the correspondence relationship between the service packages and the encryption keys is unknown, the encrypted service packages cannot be decrypted. It is therefore desirable to send from the provider to the user information that is used to establish a correspondence between information for identifying service packages and information for identifying keys K₁ used to encrypt those service packages. The information used to establish a correspondence is referred to as a ticket. By so doing, the user will be able to know from the ticket a key K₁ associated with a service package he or she wants to utilize.

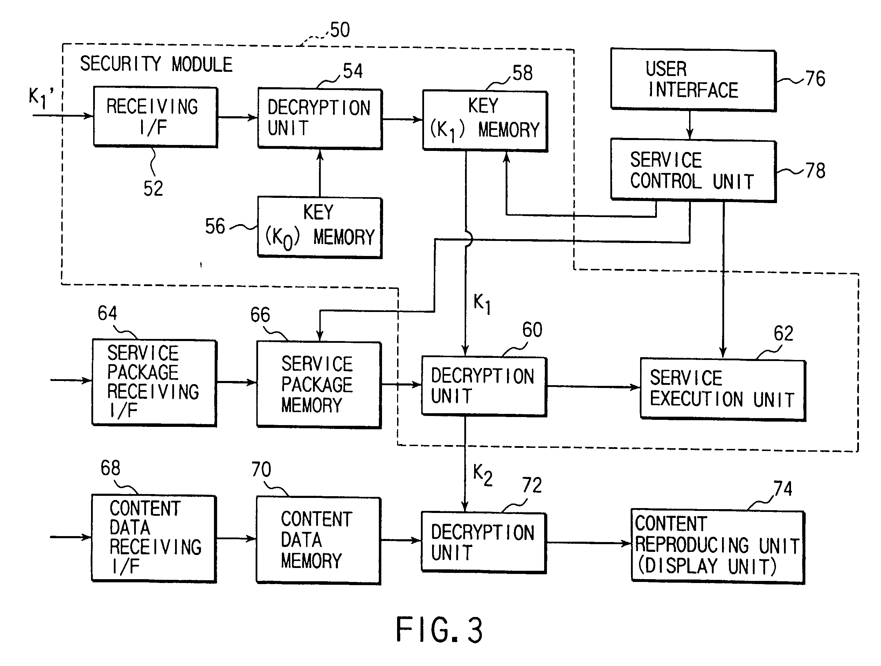

FIG. 3 shows an arrangement of the terminal at the user site. At the user site as well, a security module 50 is used which preferably is made of a semiconductor information storage card. The security module 50 comprises a receiving interface 52, decryption units 54 and 60, a key (K₀) memory 56, a key (K₁) memory 58, and a service execution unit 62.

The user accepts the encrypted key K1' from the provider by secure module-to-module communications. The key K₁' will therefore not be transmitted to any user who does not subscript to the provider. The encrypted key K1' is supplied through the receiving interface 52 to the decryption unit 54. Like the provider's security module 30, the user's security module 50 has the memory 56 for storing the encryption key K₀. The memory 56, which is also a nonvolatile memory, is stored with the key K₀ at the time of creation of a card and is later made inaccessible from outside. Thus, the service package encrypted key K1' which was encrypted on the provider side using the key K₀ can be decrypted on the user side. Note that the public key encryption system may also be used here. The decrypted key K₁ is temporarily stored in the memory 58. This is also intended to omit work of decrypting the same encrypted key K₁' each time the same service package is decrypted. The memory 58 has an enough capacity to store keys K₁ corresponding to a plurality of service packages.

The encrypted service package is received by a receiving interface 64 and then temporarily stored in a service package memory 66. The encrypted content data are received by a receiving interface 68 and then stored in a content data memory 70. The encrypted service package is decrypted in the decryption unit 60 in the security module 50 using the key K₁ stored in the memory 58 and then entered into the service execution unit 62. The key K₂ contained in the decrypted service package is supplied from the security module 50 to a decryption unit 72. This decryption unit 72 decrypts the encrypted content data stored in the memory 70 using the key K₂. The decrypted content data is are delivered to a content reproducing unit (for example, a display unit) 74.

The user's terminal further comprises a user interface 76 and a service control unit 78. The service control unit 78 controls the key K₁ memory 58, the service package memory 66, and the service execution unit 62.

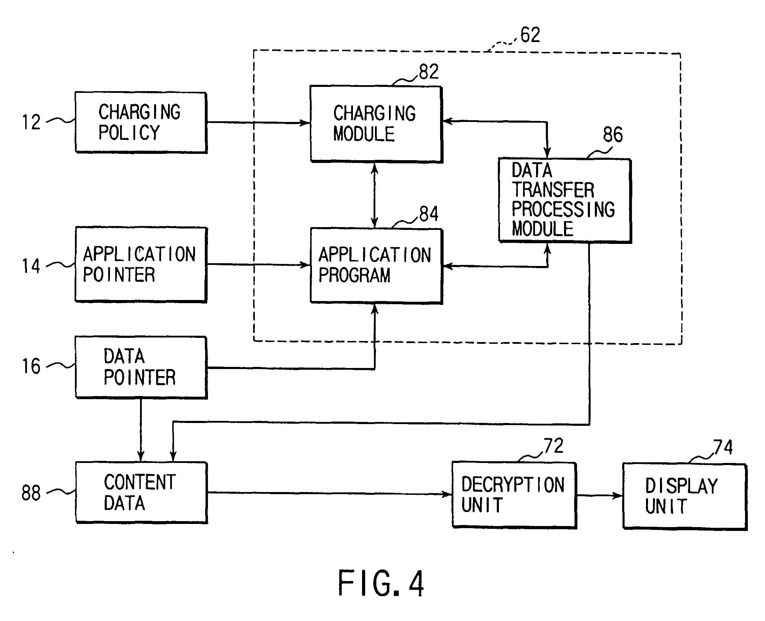

Referring now to FIG. 4, the service execution unit 62 comprises a charging module 82 which performs a charging process on the basis of the charging policy 12, an application program 84 which is run on the basis of the application pointer 14 and the data pointer 16, and a data transfer processing module 86 which allows content data 88 to be received in cooperation with the charging module 82 and the application program 84. The service execution unit 62 thus comprises hardware and software which are required to implement the information providing service on the basis of the service description, and parameters that allow the hardware and software to work properly, i.e., the unit is a collection of facilities required to implement the information providing service.

The operation of the first embodiment will be described next. The first embodiment makes it a condition that the user uses the provider-distributed security module 50 having the key K₀ memory 56. An encrypted service package and encrypted content data are transmitted to the user site online via the internet or offline using a large-volume storage medium such as a DVD, i.e., in an arbitrary mode. When utilizing an information providing service, the user receives a key K₁' peculiar to the service package from the provider. The user plugs the security module 50 that has received the key K₁' into the terminal. In the module 50, the encrypted service package is decrypted by the decryption unit 60 and a service instance is produced from the service package. At the same time, the encrypted content data is decrypted by the decryption unit 72 using the key K₂ contained in the service package.

In the decrypted service package, the application program 14 and the data pointer 16 activate a predetermined application program 84. As the application program runs, the data transfer processing module 86 reads content data 88 from a server or storage medium to initiate the usage of the information providing service and the charging module 82 charges usage of the information providing service according to the charging policy 12.

As described above, according to the first embodiment, the content data 20 and the service package 10 are encrypted using separate encryption keys and then transmitted to the user. The encryption key K₁ used to encrypt the service package 10 is further encrypted using an additional encryption key K₀ and then transmitted to the user. This additional key K₀ used to encrypt the service package encryption key K₁ is held in the memory 32 in the security module 30 that cannot be accessed from outside and the encrypted key K₁' itself is directly transmitted to the user site on a module-to-module communications basis, in other words, in an externally inaccessible state. Therefore, the user and the application program cannot rewrite the service package, which prevents the charging policy from being altered for illegal utilization of services.

A modification of the first embodiment will be described. In FIGS. 2 and 3, the security module has only circuits that meet minimum requirements built in. If it has room, however, the encryption unit 22 (FIG. 2) and the decryption unit 72 (FIG. 3) may be built into the security modules 30 and 50, respectively.

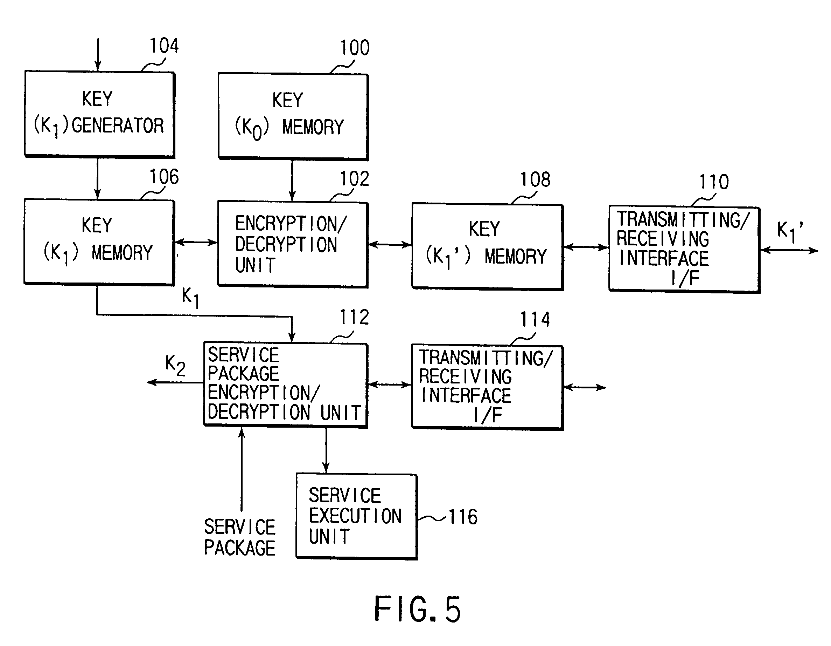

In addition, the provider's security module 30 and the user's security module 50 may be arranged identically. An example therefor is illustrated in FIG. 5. A key (K₀) memory 100 is connected to an encryption/decryption unit 102 to which a key (K₁) memory 106 and a key (K₁') memory 108 are connected. A transmitting/receiving interface 110 is connected to the key (K₁') memory 108. Information identifying a service package is given to a key (K₁) generator 104, which generates a key K₁ used to encrypt that service package. The key K₁ is stored in the key memory 106 and supplied to a service package encryption/decryption unit 112 to which a transmitting/receiving interface 114 and a service execution unit 116 are connected.

In the module used by the provider, a key K₁ peculiar to a service package is generated or received from an external organization to encrypt the service package in the service package encryption/decryption unit 112. The resulting encrypted service package is transmitted over the transmitting/receiving interface 114 to a user site. At the same time, the key K₁ is encrypted by the encryption/decryption unit 102 using a key K₀ and the resulting encrypted key K₁' is transmitted over the transmitting/receiving interface 110.

In the module at the user site, the encrypted key K₁' received from the provider over the transmitting/receiving interface 110 is decrypted in the encryption/decryption unit 102 using a key K₀ and the decrypted key K₁ is then stored in the key (K₁) memory 106. The encrypted service package received over the transmitting/receiving interface 114 is decrypted in the service package encryption/decryption unit 112 for application to the service execution unit 116.

According to such an arrangement, the provider and the user are allowed to use the security modules of the same arrangement, providing an advantage of reduced cost. In this case as well, if there is room to accommodate more hardware in the security module, the data encryption/decryption unit may also be built into the module. In addition, if the user keeps a security module of the same arrangement as the provider's security module, there is no need for the provider to directly send the service package encrypted key K1' to the user. In such a case, the user will be allowed to send the key K₁' to other users. Further, the user can also send the key K₁' via security modules of a plurality of users, allowing the key to be communicated from individual to individual like word-of-mouth communication. This will eliminate the need of operating the key publishing server all the time and is therefore suitable for an information providing service by individuals. In this case, the users who merely repeats the key will not need all the hardware of FIG. 5, but requires only the key (K₁') memory 108 and the transmitting/receiving interface 110. However, when the public key system is used, the encrypted key K₁' must be decrypted once at each repeater terminal; therefore, in the arrangement of FIG. 5 it is only the service package encryption/decryption unit 112, the transmitting/receiving interface 114 and the service execution unit 116 that can be omitted.

### (Second Embodiment)

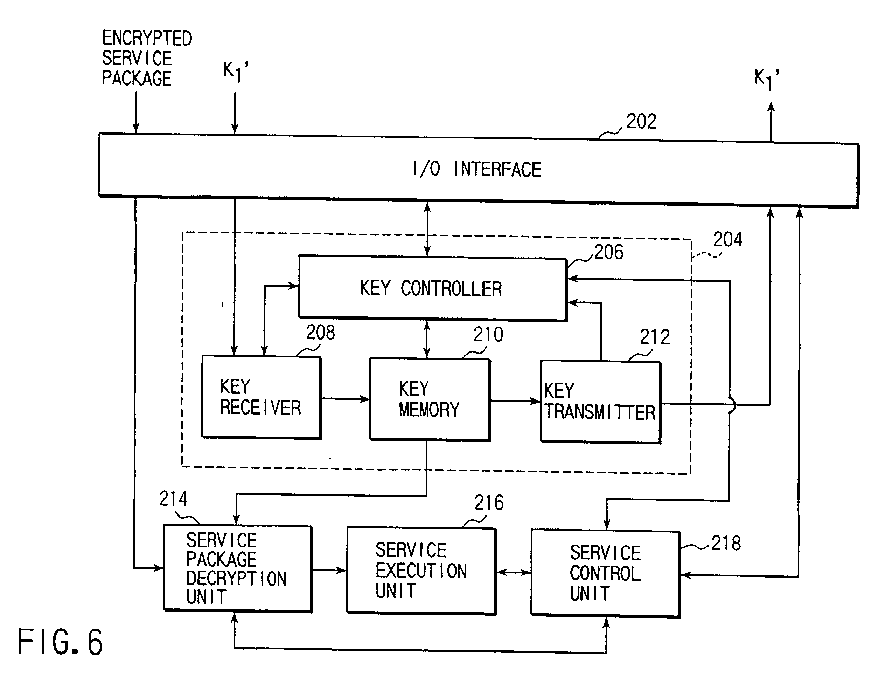

Referring to FIGS. 6 to 8, there is illustrated an arrangement of a second embodiment in which the service package and key can be repeated via a repeater. The key must be repeated using the security module. The service package is not necessary to be repeated using the security module since it is encrypted. The service package can be stored in a personal computer as a file and read out to be transmitted to the other repeater or user.

FIG. 6 shows a security module for the user having a repeater function. An input/output interface 202 receives the encrypted service package and the encrypted key K₁' from the information provider or repeater. The encrypted key K₁' is supplied to a key receiver 208 of a key management section 204. The key management section 204 comprises a key controller 206, key memory 210, and key transmitter 212 in addition to the key receiver 208. The encrypted key K₁' is written into the key memory 210 by the key receiver 208. The key k₁' read out from the key memory 210 is supplied to the key transmitter 212. The key transmitter 212 sends out the key k₁' via the I/O interface 202. Thus, the encrypted key K₁' is repeated by the user's security module.

The user's security module further comprises a service package decryption unit 214, a service execution unit 216, and a service control unit 218. The I/O interface 202 supplies the input service package (encrypted service package) to the package decryption unit 214 in which the encrypted service package is decrypted by using the key K₁' supplied from the key memory 210. The encrypted service package is supplied to the service execution unit 216 which causes the information providing service to be started. In the same manner as the first embodiment, the service execution unit 216 is controlled by a service control unit 218.

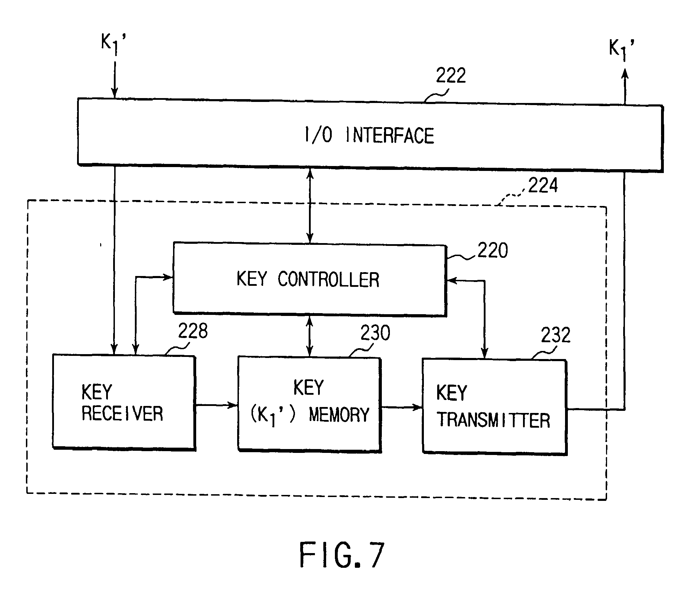

FIG. 7 shows a security module for the repeater. An input/output interface 222 receives the encrypted key K₁' from the information provider or repeater. The encrypted key K₁' is supplied to a key receiver 228 of a key management section 224. The key management section 224 comprises a key controller 226, key memory 230, and key transmitter 232 in addition to the key receiver 228. The encrypted key K₁' is written into the key memory 230 by the key receiver 228. The key k₁' read out from the key memory 230 is supplied to the key transmitter 232. The key transmitter 232 sends out the key k₁' via the I/O interface 222. Thus, the key K₁' is repeated by the repeater's security module.

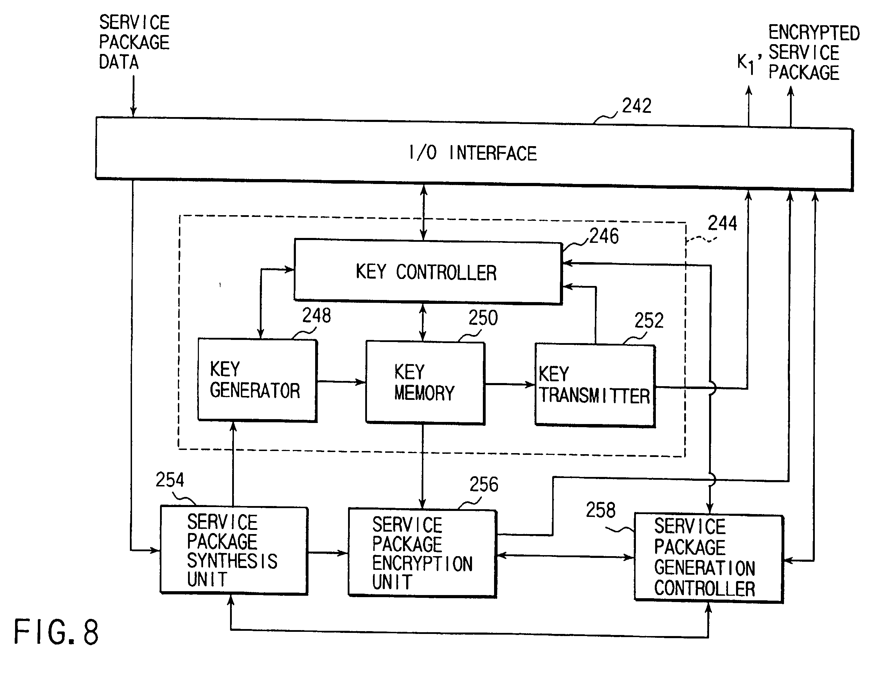

FIG. 8 shows a security module for the information provider having a repeater function. An input/output interface 242 receives data necessary for synthesize the service package. The security module comprises a key management section 244 which is formed of a key generator 248, key controller 246, key memory 250, and key transmitter 252. The key generator 248 generates an encrypted key K₁' which is an encrypted form of the encryption key K₁ of the service package 10. The key K₁' is stored in the key memory 250. The key k₁' read out from the key memory 250 is supplied to the key transmitter 252. The key transmitter 252 sends out the key k₁' via the I/O interface 242.

The provider's security module further comprises a service package synthesis unit 254, a service package encryption unit 256, and a service package generation controller 258. The I/O interface 202 supplies the input data to the service package synthesis unit 254 in which the service package is synthesized based on the input data. The service package output from the service package synthesis unit 254 is encrypted by the service package encryption unit 256. The encrypted service package is externally output from the I/O interface 242.

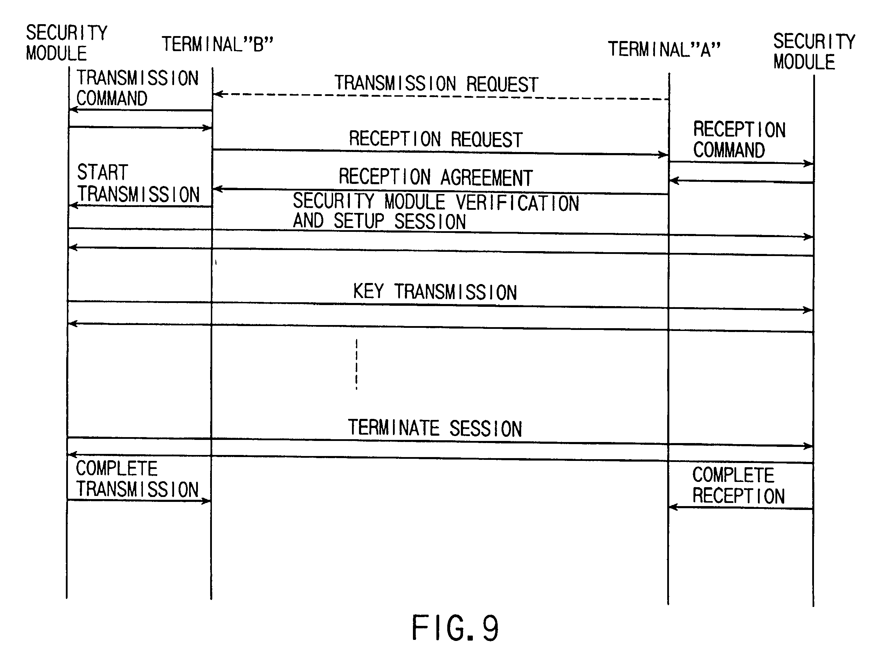

FIG. 9 shows a key transmission protocol between two terminals each having a security module. When the user of a terminal "A" wishes to receive the key from a terminal "B", the terminal "A" sends a transmission request to the terminal "B". The terminal "B" communicates with its security module a transmission command and then sends a reception request to the terminal "A". The terminal "A" communicates with its security module a reception command and then sends a reception agreement to the terminal "B". When the terminal "B" sends a start command to its security module, the security modules of the terminal "B" and terminal "A" start verification process and then the session is setup between the security modules of the terminal "B" and terminal "A". The key is transmitted from the security module of the terminal "B" to the security module of the terminal "A". After the session is terminated, the security module of the terminal "B" reports the terminal "B" of the complete of transmission and the security module of the terminal "A" reports the terminal "A" of the complete of reception.

According to the second embodiment, there can be provided a security module in which the service package and the key can be repeated.

According to the first and second embodiments, as in the conventional system described previously, in order to allow the charging function to serve as a platform, a data processing unit, such as a server, on the information provider side creates a service package 10 that contains a pair of content data (name of the content data) the information provider provides and control information (referred to as service description) required to utilize the content data.

An information providing system can be provided which provides service package security protection at the user site, including the transmitting path from the information provider to the user.

### (Third Embodiment)

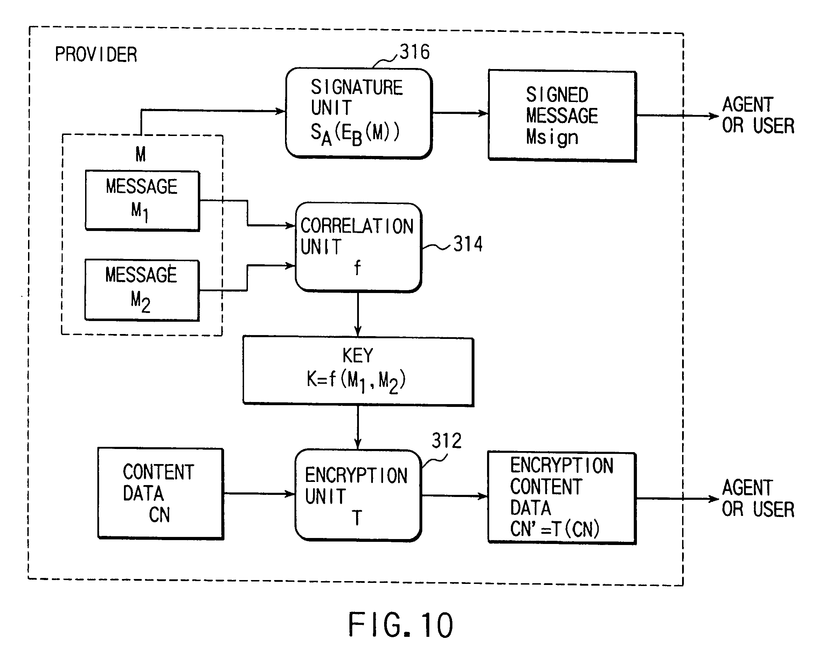

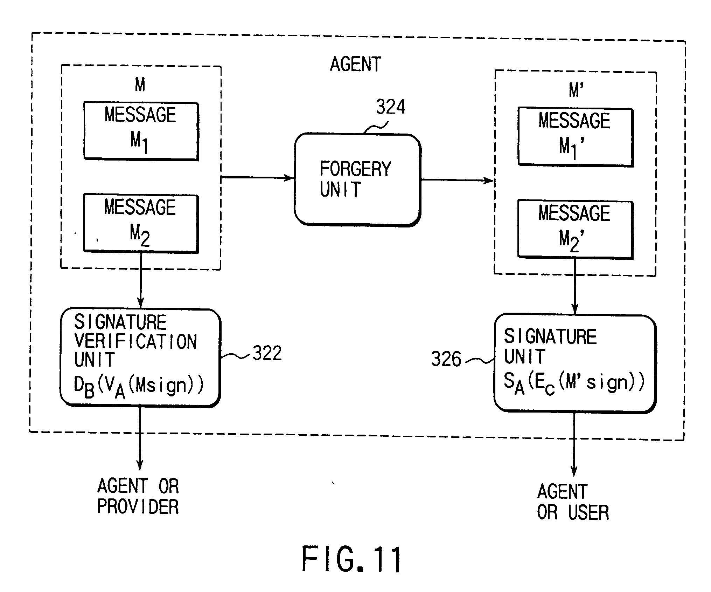

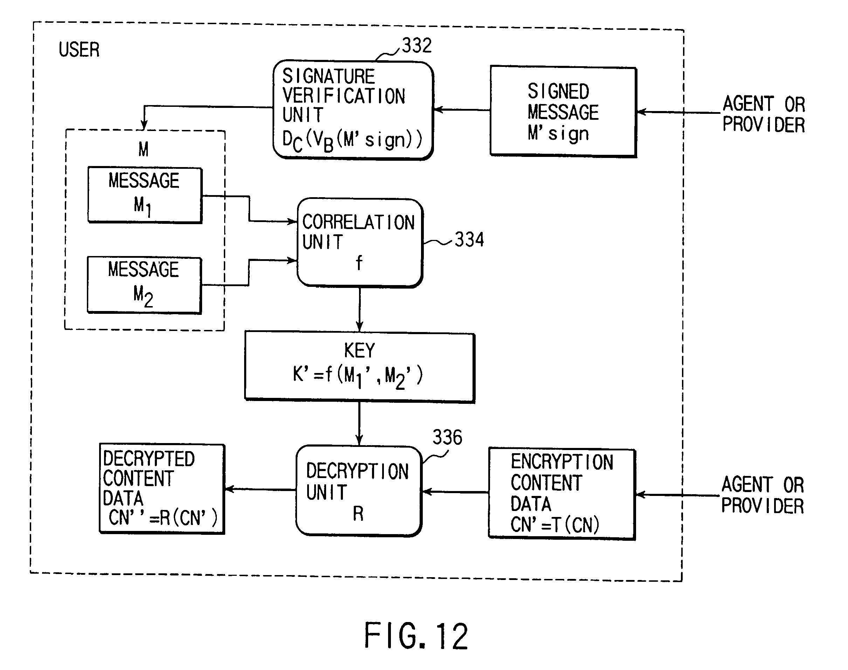

In the third embodiment, the provider encrypts content data and the encrypted content data are transmitted to the user directly or via an agent for repeating data. The service description (hereinafter referred to as a message) associated with the content data is transmitted to the user directly or via the agent. The examples of the service description is the same as that of the first embodiment. The number of agents through which the data is transmitted is not limited to one. The agent is not limited to a person who only repeats the data. Other users can be agents. The third embodiment is characterized in that the content data and/or message are transmitted to an end user via another user or agent. FIG. 10 is a schematic representation of a server on the provider side, FIG. 11 is a schematic representation of a system on the agent side, and FIG. 12 is a schematic representation of a terminal on the user side.

Content data CN, such as video, music, images, etc., which are information to be delivered, are encrypted by an encryption unit 312 and then published as encrypted content data CN' (= T(CN)) to the agent or user. A message M associated with the content data contains multiple (at least two) submessages M₁ and M₂. The encryption unit 312 uses, as an encryption key K, an output of a correlation unit 314 in which the submessages M₁ and M₂ are input to a unidirectional function or unidirectional hash function f(M₁, M₂), a value of a predetermined key generation function to which the output of the correlation unit 314 is input, or a value of the predetermined key generation function to which the output of the correlation unit 314 and data included in the associated message or stored in the device are input, therefore, the content data encryption key K are correlated with the submessages M₁, M₂ associated with the content data.

Unlike the content data CN, the message M is appended with a digital signature of the provider "A" in a signature unit 316 and a signed message M_{sign} (= S_{A}(E_{B}(M))) is transmitted to the agent or user. Here, E_{B}(M) is an encrypted message obtained by encrypting the message M using a public key of the agent "B" (or a common key that the provider "A" and the agent "B" share) in order to transmit the message M to the agent B. S_{A}(E_{B}(M)) represents the encrypted message E_{B}(M) appended with the digital signature of the provider "A". Hereinafter, E, D, S and V represent operations of encryption, decryption, signature, and verification, respectively. The purpose of transmitting of the message M with the digital signature is to guarantee that the message is a true message transmitted from the provider.

As shown in FIG. 11, in the message agent's system, the message M_{sign} with the digital signature is verified by a signature verification unit 322 and the original message M (= D_{B}(V_{A}(M_{sign})) is reproduced. Here, V_{A}(M_{sign}) is the encrypted message for which verification has been made that it was signed by the provider "A", and D_{B}(V_{A}(M_{sign})) is a message in plaintext obtained by decrypting the encrypted message V_{A}(M_{sign}) using the secret key of the agent "B" (or the common key that the provider "A" and the agent "B" share).

Suppose here that the agent is malicious and alters part of submessages M₁ and M₂ to yield M₁' and M₂ by using a forgery unit 324. It is assumed that at least one of M₁' ≠ M₂ and M₁' ≠ M₂ is satisfied. The agent "B" attaches the own digital signature to the forged message M' by using a signature unit 326. The forged message with the signature M'_{sign} (= S_{B}(E_{C}(M'_{sign}))) is transmit to the user. Alternatively, the signed message M'_{sign} may be transmitted to the user via still another agent.

As shown in FIG. 11, the agent's system can be implemented by a conventional data processing apparatus, such as a personal computer. For a honest agent, the message is received and merely retransmit to the agent or user. Therefore, the forgery unit 324 is replaced with a mere buffer memory.

As shown in FIG. 12, in the user's system, the message M'_{sign} with the digital signature transmitted from the provider or agent (in this case, the message is forged by the agent) is verified in a signature verification unit 332. The original forged message M' (= D_{C}(V_{B}(M'_{sign})) is obtained. Here, V_{B}(M'_{sign}) is the message M' forged and signed by the agent "B", and D_{C}(V_{B}(M'_{sign}) is a message in plaintext obtained by decrypting the encrypted message M', for which verification has been made that it was signed by the agent "B", using the secret key belonging to the user "C" (or the common key that the agent "B" and the user "C" share). The encrypted content data CN' is decrypted by a decryption unit 336. The decryption unit 336 uses, as a decryption key K', an output of a correlation unit 334 in which the submessages M₁' and M₂' contained in the message M' are input to a unidirectional function or unidirectional hash function f(M₁', M₂'), a value of a predetermined key generation function to which the output of the correlation unit 314 is input, or a value of the predetermined key generation function to which the output of the correlation unit 314 and data included in the associated message or stored in the device are input. If the message M is not forged by the agent, then the key K' supplied to the decryption unit 336 will be equal to the key K supplied to the encryption unit 312 on the provider side. In this case, however, the message is forged as described above, the key K' supplied to the decryption unit 336 is f(M₁', M₂').

If the message M is not forged by the agent, then the key K' equals to the key K and the decrypted content data CN'' (= R(CN')) matches the content data CN on the provider side.

However, when, as shown in FIG. 11, the agent forges the message, the key K' to the decryption unit 336 is K' = f(M₁', M₂') ≠ f(M₁, M₂), resulting in a mismatch between the decrypted content data CN'' and the original content data CN. In other words, the original content data are not available on the user side. In such case, the user will suppose that the message given by the agent is not correct, that is, the agent would have committed some injustice, and then notifies the provider of that. As a result, the provider sends the correct message directly to the user, thus allowing the user to decrypt and utilize the content data.

In the event that the agent has altered the submessage M1 to M1', in order to cause the decryption key K' (= f(M₁', M₂')) to match the encryption key K (= f(M₁, M₂)), it is required to change the other submessage M2 as well to M2' that satisfies f(M₁', M₂') = K. Since the function f is a unidirectional one, however, it is almost impossible for the malicious agent to find M₂' that satisfies f(M₁', M₂') = K, i.e., M₂ that allows K' to be changed to K.

As described so far, according to the third embodiment, by making a content data encryption key a unidirectional function or unidirectional hash function of the whole message or parts of the message (in this embodiment, two parts of the message) associated with the content data, that is, by correlating the encryption key with the message, the decryption of the content data becomes disabled when the message is forged. It therefore becomes possible to prevent unauthorized usage of content data and protect the digital rights of information providers. In addition, since the encryption key is never known to the users and agents, encrypted content data can never be decrypted illegally. Moreover, since the message containing at least two submessages used to generate an encryption key can be transmitted offline to the final user via the agent or other agents, there is no need of installing a key issuing server and hence the cost involved in providing information is reduced. This is suitable for an information providing service by individuals.

### (Detailed Example)

Detailed example of a specific application of the third embodiment will be described next. As an example, it is assumed that the content data CN are MPEG-compressed video and the message M contains charging information for billing a user for video. The provider "A" describes in the submessage M1 charging information such that user should pay the provider "A" 1000yen for this video. The submessage M2 may contain the name of video information (content data) or a data pointer indicating the address of the video information, an application pointer indicating which of application programs is to be used for the content data, etc, as shown in FIG. 2. It should be noted that the number of submessages used to generate an encryption key is not limited to two, but may be three or more.

The provider "A" passes the message M to an agent "B" with its signature attached.

The agent verifies the signature of the message M and then sends it to a user directly or via another agent with its signature attached.

The user can decrypt the content data using the key generated from the submessages M1 and M2 of the message M thus received.

Suppose here that a malicious agent "B" alters the submessage M1 to a submessage M1' describing that user should pay the agent "B" 1,000yen and sends it to the user with its signature attached. In such a case, the user will know from this message M1' that it is to the agent "B" that he or she should pay 1,000yen for usage of content data. However, since the message has been forged, the correct encryption key cannot be obtained, so that the user fails to decrypt the encrypted content data. It turns out, on contact with the provider "A", that the agent "B" forged the message. Thus, it is possible to cause a malicious agent's plot to forge a message and take a charge to be paid to the provider "A" to end in failure.

### (Fourth Embodiment)

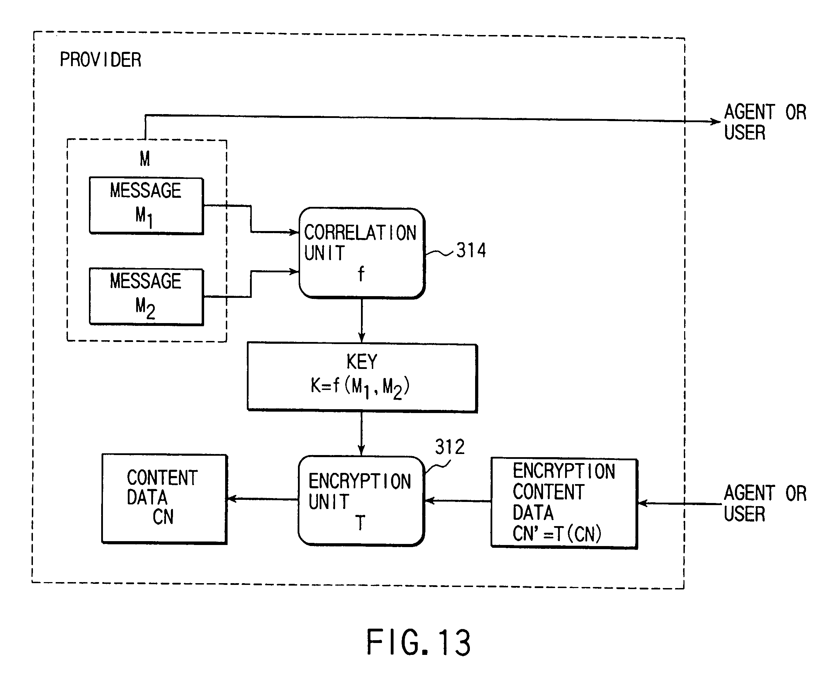

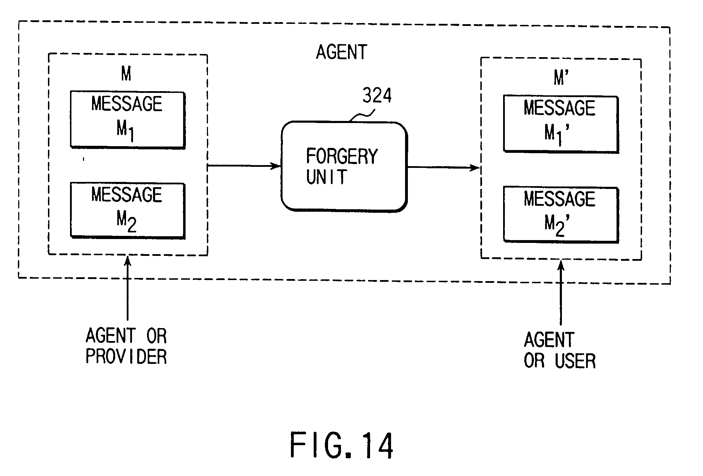

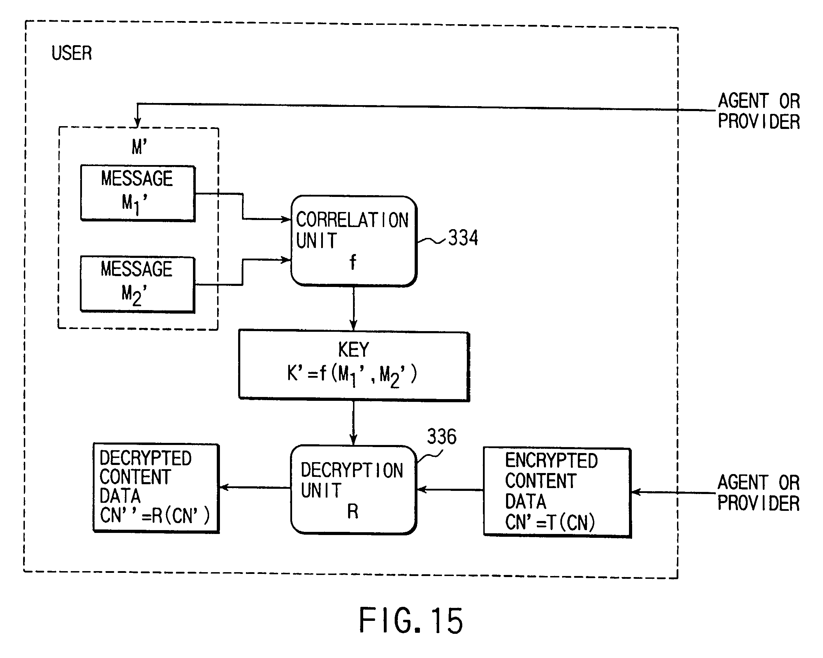

In the third embodiment, it is not required that a digital signature is attached to the message. The fourth embodiment is a modification of the third embodiment in which the message is directly transmitted without a digital signature. FIG. 13 is a schematic representation of a server on the provider side, FIG. 14 is a schematic representation of a system on the agent side, and FIG. 15 is a schematic representation of a terminal on the user side. The provider does not attach the digital signature to the message. The agent does not perform a signature verification and merely relay the received message to the other agent or user. The user correlates the submessages included in the received message.

Additional advantages and modifications will readily occur to those skilled in the art. Therefore, the present invention in its broader aspects is not limited to the specific details, representative devices, and illustrated examples shown and described herein. Accordingly, various modifications may be made without departing from the spirit or scope of the general inventive concept as defined by the appended claims and their equivalents.

For example, in the first and second embodiments, the user cannot know the charging policy data without decryption and a security module is need for decryption. The user has no security module before service utilization. This is inconvenient for users. For this reason, it is desirable that a second charging policy identical to a charging policy to be transmitted in encrypted form be prepared separately and transmitted to the user site without encryption. The user can know the second charging policy data to decide whether to utilize the service or not. In this case, it is the charging policy contained in the decrypted service package that is transmitted to the service execution unit 62. However, a third party might alter the second charging policy in plaintext to render a charge for service free. This affords little user protection. It is therefore desirable that the user device be equipped with means for making a comparison between the decrypted charging policy and the second charging policy and disabling service utilization when the comparison indicates inequality.

In the first and second embodiments, in order to keep the decrypted service package unknown to the user, the decryption unit 60 and the service execution unit 62 are installed in the security module 50. That is, hardware is used to prevent alteration of information. Of course, the service package may be protected by software. A certificate that guarantees that the service package and the key K₁ are not output to outside nor retained may be attached to a service instance itself which is software for implementing the service package. In the absence of this certificate, the service package is disabled from being decrypted. In this case, the decryption unit 60 and the service execution unit 62 need not be installed in the security module 50. Further, if, when hardware is used to prevent alteration of information, the user's terminal is reliable, the decryption unit 60 and the service implementing unit 62 may not necessarily be provided in the security module 50. Although being implemented by a platform, the service package decryption unit and/or charging system may be implemented as an application program as with normal data processing.

It is not necessarily required that an agent or agents intervene between a provider and a user according to the above-mentioned embodiments. With no agent, a message may be transmitted from the provider to the user together with encrypted content data. In this case, the need of signature transfer processing through message is saved.

The transfers of content data and messages may be made online via the internet or offline through DVDs.

In the third embodiment, the signature encryption may be either public key-based or common key-based. The message may include not only charging information but also data described in accordance with a format such as SGML (Standard Generalized Markup Language), HTML (HyperText Markup Language), MHEG(Multimedia and Hypermedia Experts Group), XML(eXtensible Markup Language), and their extended or limited format or the like.

When the correlation unit 341 on the user side which calculates a unidirectional function or unidirectional hash function value is built into the security module, such as a semiconductor chip, a smart card, or the like, which is physically disabled against readout, as well as a decrypting unit for the content data, the security can be further increased because the key K is never read out to outside. The reason is that, if a user intervenes between the module in which the unidirectional function or unidirectional hash function is used to calculate the key K and the module in which the content data are decrypted, the user will be able to know the value for key K to thereby decrypt the content data, associate an entirely different message with the decrypted content data, and encrypt the content data using a different key. It must be avoided to make it possible to decrypt encrypted content data readily with no need of a message.

As described above, according to the present invention, there is provided an information providing system which has a facility of protecting content data and provider's rights at the user site including a transmitting path from an information provider to a user and permits information to be delivered readily.

## Claims

1. An information providing device for providing information to users with an information storage card for storing a second key, **characterized in that** the device comprising; means (42) for transmitting, a service package that describes information necessary for utilization of the provided information, the service package being encrypted in accordance with a first encryption system; and means (40) for transmitting a first key used in the first encryption system, the first key being encrypted using the second key which is stored in the information storage card.

2. An information providing system comprising; a provider device according to claim 1 and a user device for utilizing information, an information storage card adapted to be connected to the provider device and the user device; the user device comprising means (54) for decrypting the encrypted first key within the information storage card.

3. The information providing system according to claim 1, **characterized in that** the service package after decryption is disabled from being retained within the user device or being output from the user device to outside.

4. The information providing system according to claim 2, **characterized in that** the encrypted service package is decrypted within the information storage card and the decrypted service package is disabled from being output to outside of the information storage card.

5. The information providing system according to claim 2, **characterized in that** the user device comprises service package decryption means (60) for decrypting the encrypted service package and means for disabling the service package decryption means from decrypting the encrypted service package when it is not guaranteed that the decrypted service package should not be retained within the user device nor be output to the outside of the user device.

6. The information providing system according to claim 1, **characterized in that** the service package comprises information (16) for identifying information to be provided, information (14) for identifying an application program that utilizes the information to be provided, and information (12) indicating a charging policy relating to the utilization of the information to be provided, and the user device comprises an application program execution unit (62) that operates in response to the decrypted application program identifying information, a charging unit that operates in response to the decrypted charging policy identifying information.

7. The information providing system according to claim 5, **characterized in that** the application program execution unit is implemented by an application program, and the charging unit is implemented by a platform that is different from the application program.

8. The information providing system according to claim 5, **characterized in that** said provider device comprises means for sending to the user device, a second charging policy identical to the charging policy contained in the encrypted service package without encryption.

9. The information providing system according to claim 1, **characterized in that** the first key used in the first encryption system is generated in the information storage card.

10. The information providing system according to claim 1, **characterized in that** the first key used in the first encryption system is generated by an authorized agent and is written into the information storage card.

11. The information providing system according to claim 1, **characterized in that** the provider device comprises means for sending a ticket to the user device, the ticket associating information identifying the service package with information identifying a key used to encrypt that service package and the user device comprises means for identifying a key associated with the service package to be utilized on the basis of the ticket.

12. The information providing system according to claim 1, which further comprises a repeater unit for receiving the message data from the provider device and transmitting the received message data to the user device.

13. An information providing system according to claim 1, **characterized in that** a security module comprising means for storing a second key in such a way that it cannot be read out to outside, the user device comprises means (54) for decrypting the encrypted first key within the security module.

14. The information providing system according to one of the preceding claims, **characterized in that** the system comprises a repeater unit for receiving the message data from the provider device and transmitting the received message data to the user device.

## Patentansprüche

1. Informationsbereitstellungsgerät zum Bereitstellen von Informationen für Nutzer mit einer Informationsspeicherkarte zum Speichern eines zweiten Schlüssels, **dadurch gekennzeichnet, dass** das Gerät Mittel (42) zur Übertragung eines Servicepaketes, das die für die Verwendung der bereitgestellten Informationen erforderlichen Information beschreibt, wobei das Servicepaket entsprechend eines ersten Verschlüsselungssystems verschlüsselt ist, und Mittel (40) zum Übertragen eines ersten Schlüssels hat, der in dem ersten Verschlüsselungssystem verwendet wird, wobei der erste Schlüssel unter Verwendung des zweiten Schlüssels verschlüsselt wird, der in der Informationsspeicherkarte gespeichert ist.

2. Informationsbereitstellungssystem umfassend: ein Bereitstellungsgerät nach Anspruch 1 und ein Nutzergerät zur Verwendung von Informationen, eine Informationsspeicherkarte, die angepasst ist, um mit dem Bereitstellungsgerät und dem Nutzergerät verbunden zu werden, wobei das Nutzergerät Mittel (54) zur Entschlüsselung des verschlüsselten ersten Schlüssels in der Informationsspeicherkarte umfasst.

3. Informationsbereitstellungssystem nach Anspruch 1, **dadurch gekennzeichnet, dass** das Servicepaket nach der Entschlüsselung gegen ein Zurückhalten in dem Nutzergerät oder ein Ausgeben nach außen von der Nutzervorrichtung gesperrt ist.

4. Informationsbereitstellungssystem nach Anspruch 2, **dadurch gekennzeichnet, dass** das verschlüsselte Servicepaket in der Informationsspeicherkarte entschlüsselt ist und das entschlüsselte Servicepaket gegen ein Ausgeben von der Informationsspeicherkarte nach außen gesperrt ist.

5. Informationsbereitstellungssystem nach Anspruch 2, **dadurch gekennzeichnet, dass** das Nutzergerät Servicepaket-Entschlüsselungsmittel (60) zum Entschlüsseln des verschlüsselten Servicepaketes und Mittel zum Sperren der Servicepaket-Entschlüsselungsmittel vor einer Entschlüsselung des verschlüsselten Servicepaketes hat, falls nicht sichergestellt ist, dass das entschlüsselte Servicepaket weder innerhalb der Nutzervorrichtung zurückbehalten noch nach außen von der Nutzervorrichtung abgegeben werden darf.

6. Informationsbereitstellungssystem nach Anspruch 1, **dadurch gekennzeichnet, dass** das Servicepaket Informationen (16) zur Identifizierung von bereitzustellenden Informationen, Informationen (14) zur Identifizierung eines die bereitzustellenden Informationen verwendenden Anwendungsprogramms und Informationen (12) umfasst, die auf eine Abrechnungsregel bezogen auf die Verwendung der bereitzustellenden Informationen hinweist, und das Nutzergerät eine Anwendungsprogramm-Ausführungseinheit (62), die in Reaktion auf die entschlüsselte Anwendungsprogramm-Identifikationsinformation arbeitet, und eine Abrechnungseinheit hat, die in Reaktion auf die entschlüsselte Abrechnungsregel- Identifikationsinformation arbeitet.

7. Informationsbereitstellungssystem nach Anspruch 5, **dadurch gekennzeichnet, dass** die Anwendungsprogramm-Ausführungseinheit durch ein Anwendungsprogramm implementiert ist, und die Abrechnungseinheit durch eine Plattform implementiert ist, die sich von dem Anwendungsprogramm unterscheidet.

8. Informationsbereitstellungssystem nach Anspruch 5, **dadurch gekennzeichnet, dass** das Bereitstellungsgerät Mittel zum Senden einer zweiten Abrechnungsregel, die identisch mit der in dem verschlüsselten Servicepaket ohne Verschlüsselung enthaltenen Abrechnungsregel ist, an die Nutzervorrichtung hat.

9. Informationsbereitstellungssystem nach Anspruch 1, **dadurch gekennzeichnet, dass** der erste Schlüssel, der in dem ersten Verschlüsselungssystem verwendet wird, in der Informationsspeicherkarte generiert wird.

10. Informationsbereitstellungssystem nach Anspruch 1, **dadurch gekennzeichnet, dass** der erste Schlüssel, der in dem ersten Verschlüsselungssystem verwendet wird, durch einen autorisierten Agenten generiert und in die Informationsspeicherkarte geschrieben wird.

11. Informationsbereitstellungssystem nach Anspruch 1, **dadurch gekennzeichnet, dass** das Bereitstellungsgerät Mittel zum Senden eines Tickets an das Nutzergerät umfasst, wobei das Ticket Informationen zur Identifizierung des Servicepaketes mit Informationen zur Identifizierung eines Schlüssels verbindet, der zur Verschlüsselung dieses Servicepaketes verwendet wird, und wobei das Nutzergerät Mittel zur Identifizierung eines Schlüssels hat, der mit dem auf der Grundlage des Tickets zu verwendenden Servicepaket verbunden ist.

12. Informationsbereitstellungssystem nach Anspruch 1, das weiterhin eine Repeatereinheit zum Empfangen der Nachrichtendaten von dem Bereitstellungsgerät und zum Übertragen der empfangenen Nachrichtendaten an das Nutzergerät hat.

13. Informationsbereitstellungssystem nach Anspruch 1, **dadurch gekennzeichnet, dass** ein Sicherheitsmodul Mittel zum Speichern eines zweiten Schlüssels derart, dass er nicht von außen ausgelesen werden kann, und das Nutzergerät Mittel (54) zum Entschlüsseln des verschlüsselten ersten Schlüssels innerhalb des Sicherheitsmoduls hat.

14. Informationsbereitstellungssystem nach einem der vorstehenden Ansprüche, **dadurch gekennzeichnet, dass** das System eine Repeatereinheit zum Empfangen der Nachrichtendaten von dem Bereitstellungsgerät und zum Übertragen der empfangenen Nachrichtendaten an das Nutzergerät hat.

## Revendications

1. Dispositif de fourniture d'information pour fournir une information à des utilisateurs avec une carte de stockage d'information pour stocker une seconde clef, **caractérisé en ce que** le dispositif comprend; des moyens (42) pour transmettre, un ensemble de services qui décrivent l'information nécessaire pour l'utilisation de l'information fournie, l'ensemble de services étant encrypté conformément à un premier système d'encryptage; et des moyens (40) pour transmettre une première clef utilisée dans le premier système d'encryptage, la première clef étant encryptée en utilisant la seconde clef qui est stockée dans la carte de stockage d'information.

2. Système de fourniture d'information comprenant; un dispositif fournisseur selon la revendication 1 et un dispositif utilisateur pour utiliser l'information, une carte de stockage d'information adaptée à être connectée au dispositif fournisseur et au dispositif utilisateur, le dispositif utilisateur comprenant des moyens (54) pour décrypter la première clef encryptée dans la carte de stockage d'information.

3. Système de fourniture d'information selon la revendication 1; **caractérisé en ce que** l'ensemble de services après décryptage est désactivé de la mémoire du dispositif utilisateur ou sorti depuis le dispositif utilisateur vers l'extérieur.

4. Système de fourniture d'information selon la revendication 2, **caractérisé en ce que** l'ensemble de services encrypté est décrypté dans la carte de stockage d'information et l'ensemble de services décrypté est désactivé de la sortie à l'extérieur de la carte de stockage d'information.

5. Système de fourniture d'information selon la revendication 2, **caractérisé en ce que** le dispositif utilisateur comprend des moyens de décryptage de l'ensemble de services (60) pour décrypter l'ensemble de services encrypté et des moyens pour désactiver les moyens de décryptage de l'ensemble de services du décryptage de l'ensemble de services encrypté lorsqu'il n'est pas garanti que l'ensemble de services décrypté ne peut pas être retenu dans le dispositif utilisateur ni être sorti vers l'extérieur du dispositif utilisateur.

6. Système de fourniture d'information selon la revendication 1, **caractérisé en ce que** l'ensemble de services comprend une information (16) pour identifier l'information à fournir, une information (14) pour identifier un programme d'application qui utilise l'information à fournir, et une information (12) indiquant la stratégie de charge relative à l'utilisation de l'information devant être fournie, et le dispositif utilisateur comprend une unité d'exécution du programme d'application (62) qui opère en réponse à l'information d'identification du programme d'application décrypté, une unité de charge qui opère en réponse à une information d'identification de stratégie de charge décryptée.

7. Système de fourniture d'information selon la revendication 5, **caractérisé en ce que** l'unité d'exécution du programme d'application est implémentée par un programme d'application, et l'unité de charge est implémentée par une plateforme qui est différente du programme d'application.

8. Système de fourniture d'information selon la revendication 5, **caractérisé en ce que** ledit dispositif fournisseur comprend des moyens d'envoi vers le dispositif utilisateur, une seconde stratégie de charge identique à la stratégie de charge contenue dans l'ensemble de services encrypté sans encryptage.

9. Système de fourniture d'information selon la revendication 1, **caractérisé en ce que** la première clef utilisée dans le premier système d'encryptage est générée dans la carte de stockage d'information.

10. Système de fourniture d'information selon la revendication 1, **caractérisé en ce que** la première clef utilisée dans le premier système d'encryptage est générée par un agent autorisé et est écrite dans la carte de stockage d'information.

11. Système de fourniture d'information selon la revendication 1, **caractérisé en ce que** le dispositif fournisseur comprend des moyens pour envoyer un ticket au dispositif utilisateur, le ticket associant l'information identifiant l'ensemble de services avec une information identifiant une clef utilisée pour encrypter cet ensemble de services et le dispositif utilisateur comprend des moyens pour identifier une clef associée avec l'ensemble de services à utiliser sur la base du ticket.

12. Système de fourniture d'information selon la revendication 1, **caractérisé** qui comprend également une unité répéteur pour recevoir les données de message provenant du dispositif fournisseur et transmettre les données de message reçues au dispositif utilisateur.

13. Système de fourniture d'information selon la revendication 1, **caractérisé en ce qu'**un module de sécurité comprenant des moyens pour stocker une seconde clef de manière à ce qu'elle ne puisse pas être lue à l'extérieur, le dispositif utilisateur comprend des moyens (54) pour décrypter la première clef encryptée dans le module de sécurité.

14. Système de fourniture d'information selon l'une des revendications précédentes, **caractérisé en ce que** le système comprend une unité répéteur pour recevoir les données de message provenant du dispositif fournisseur et transmettre les données de message reçues au dispositif utilisateur.
